# EUROPEAN PATENT APPLICATION

(11) **EP 4 762 962 A2**
(43) Date of publication of application: **24.06.2026**
(21) Application number: 26178058.9
(22) Date of filing: 20.09.2019
(51) Int. Cl.: A41B 9/06

(54) **PROCEDURE FOR MANUFACTURING AN UNDERSHIRT AND UNDERSHIRT OBTAINED WITH THIS PROCEDURE**

(30) Priority: 28.09.2018 IT 201800009002
(62) Divisional of application: 19786679.1
(71) Applicant: SANTONI S.p.A., 25135 Brescia (IT)
(72) Inventor: SMUSSI, Diego, 25082 BOTTICINO SERA (BS) (IT)
(74) Representative: PGA S.p.A.

(57) **Abstract**

The present invention relates to a procedure for manufacturing an undershirt (1) provided with a trunk (T), two sleeves (M) and a collar (C), comprising the following steps: providing a circular knitting machine using seamless technology; constructing a first tubular fabric element (10) comprising a front side (11), a rear side (12), an upper edge (13) and a lower edge (14); drawing cutting lines (31, 32, 33, 34) on the first tubular element, during construction; cutting the first tubular element along the cutting lines to separate portions of fabric creating flaps of fabric belonging to the front side and to the rear side of the first tubular element; joining with stitches the flaps of said portions of fabric, obtained during the preceding step of cutting, to create at least the two sleeves and the trunk of the undershirt from the first tubular element.

## Description

### Technical field

The present invention relates to the sector of clothing and of hosiery and knitting machines, also for technical wear and sportswear, which use seamless technology.

**In** particular, the present invention concerns a procedure for manufacturing an undershirt.

### Background art

Seamless technology makes it possible to create garments in elastic fabric substantially with a limited number of seams in contact with the skin.

Optimization of the number and of the position of seams prevents the appearance of bothersome and unsightly marks on the skin, making the garment comfortable and allowing total freedom of movement.

In substance, seamless technology creates cylindrical tubular elements composed of special weaves and structures that knit the different yarns to achieve the composition of the whole garment, creating a garment that adheres perfectly and is figure-hugging, adapting to the shapes of the body and preventing the formation of air pockets that would cause lowering of the body temperature.

The effect obtained is that of a second skin, which envelops and shapes the body seamlessly. Due to the elastic fabric with circular weave, the garments in fact behave like a second skin, allowing freedom of movement and reducing friction.

With seamless technology, used skillfully, it is possible to obtain garments with a "clean" appearance, with great definition of the designs and a very limited thickness to ensure lightness and comfort, both for creating intimate knitwear and for creating outerwear garments.

Seamless technology, initially used for hosiery and undergarments, has in fact gradually been extended to other sectors, such as outerwear, sportswear, swimwear, fitness garments and the like. It has been widely used above all in the underwear sector, due to its great qualities of fit and comfort combined with LYCRA fiber.

Currently, the procedure for manufacturing an undershirt with a circular machine and with seamless technology involves a first construction step of at least three tubular elements: a first tubular element will create the body of the T-shirt and therefore will cover the trunk, a second tubular element, suitably divided, will create the two sleeves and a third tubular element will produce the collar of the T-shirt.

The diameter of the cylinder of the machine, measured in inches, determines the size of the T-shirt, defining the width of the trunk.

During construction of the tubular elements, suitable cutting lines are drawn thereon, according to paths defined by the graphic programs connected to the machine, which will delineate the shape of the parts of which the T-shirt is composed.

In particular:
- a cutting line that shapes the shoulders and the collar of the T-shirt is drawn on said first tubular element;
- two cutting lines that delimit the portion of fabric that will create the two sleeves of the T-shirt are drawn on said second tubular element;
- two cutting lines to isolate the portion of fabric that will create the collar of the T-shirt are drawn on said third tubular element.

After the tubular elements have been cut along said cutting lines, the remaining discarded fabric must be eliminated.

The final step of the manufacturing procedure is assembling and then stitching the garment: the first tubular element is stitched along the shoulder line leaving the central neck opening; the sleeves cut from the second tubular element are stitched to themselves and attached to the first tubular element at the armhole, the fabric obtained from the third tubular element is closed in a ring and stitched to said first tubular element at the central neck opening.

This procedure has limits and drawbacks related to the time required to manufacture a single T-shirt and the amount of material used, compared to the large amount of material discarded.

The knitting time and the amount of raw materials used is directly proportional to the number of tubular elements constructed and used to create each single T-shirt. Moreover, besides the waste of raw material, there is also the added cost of disposing with the discarded material, while besides slowing production, the processing time has high energy costs.

An example of the afore-mentioned undershirt manufacturing method is provided in document WO97/47794A1, wherein the trunk portion and the sleeves are obtained from different circularly knitted fabrics and then joined together by stitching operations. Alternative solutions have been proposed to address the above-mentioned problems of the prior art.

The document EP1091033A2 discloses a method wherein circular knitted double fabric is used to produce a garment. At first layer of the fabric is knitted only by dial needles, while a second fabric is knitted only by cylinder needles. A stitching between the inner and outer layers is done using both of the dial and cylinder needles along a closed outline of the garment. A cutting of the fabric along the closed outline is performed in such a manner that the stitched parts are at least partially left so that the garment can be separated from the fabric without the need of further stitching operations.

Document WO2005/032288A2 provides an undershirt wherein a piece of flat knitted hosiery fabric is properly cut so that it can be folded to join at least part of its edges. The meeting edges are then stitched, sewn or otherwise joined to form the undershirt having a seam extending under the arm portion and down to an adjacent side of the trunk portion. Finally, an incision is made in the fabric to form a head opening.

### Presentation of the invention

The object of the invention is to implement a procedure for manufacturing an undershirt, using circular machines for hosiery and seamless technology, which lowers costs and production times, and consequently generates a saving on the price of the finished manufactured garment, while maintaining the specific features of the finished garment obtained with these machines.

These objects are achieved with a procedure for manufacturing an undershirt provided with a trunk, two sleeves and a collar, comprising the steps of:
- providing a circular knitting machine using seamless technology;
- constructing a first tubular fabric element using said machine, where said first tubular element comprises a front side, a rear side, an upper edge and a lower edge;
- drawing cutting lines on said first tubular element, during construction,
- cutting said first tubular element along said cutting lines to separate portions of fabric of said first tubular element, to create flaps of fabric belonging to the front side and to the rear side of said first tubular element;
- joining with stitches the flaps of said portions of fabric obtained with said cutting lines to create at least the two sleeves and the trunk of said undershirt from said first tubular element.

According to a first aspect of the invention, said step of drawing cutting lines on said first tubular element, during construction, comprises the step of drawing a first, a second, a third and a fourth cutting line positioned longitudinal to the length of said first tubular element, where said first and said second cutting line belong to the front side of said first tubular element while said third and said fourth cutting line belong to the rear side thereof. Alternatively, said first, second, third and fourth cutting line are between said lower edge of said first tubular element and an intermediate portion thereof, without reaching its upper edge; or said first, second, third and fourth cutting line have an overturned elongated V shape and each start from the lower edge of said first tubular element, rise towards said upper edge and descend to finish once again on the lower edge.

According to further aspects of the invention, said step of drawing cutting lines on said first tubular element, during construction, comprises the step of:
- drawing a fifth and a sixth cutting line, where said fifth and said sixth cutting line each start from the upper edge of the front side of said first tubular element, descend towards said lower edge and rise again to end on the upper edge of the rear side of said first tubular element;
- drawing a seventh cutting line that extends along said upper edge of said first tubular element and has a profiled shape, moving away from and towards said upper edge;
- drawing an eighth and a ninth cutting line positioned transversal to the length of said first tubular element, between said first and said third cutting line and between said second and said fourth cutting line respectively.

Advantageously, said procedure comprises the step of joining with stitches the flaps of said portions of fabric obtained with said cutting lines to create the two shoulders of said undershirt.

Moreover, said manufacturing procedure comprises the step of eliminating excess material deriving from cutting said first tubular element along said cutting lines.

In a possible variant of the invention, said procedure comprises the steps of:
- constructing a second fabric tubular element using said machine, where said second tubular element comprises a front side, a rear side, an upper edge and a lower edge;
- drawing on said second tubular element, during construction, a tenth and an eleventh cutting line, positioned longitudinal to the length of said second tubular element, between its lower edge and its upper edge, where said tenth cutting line belongs to the front side of said second tubular element while said eleventh cutting line belongs to the rear side thereof;
- cutting said second tubular element along said tenth and said eleventh cutting line to separate portions of fabric of said second tubular element;
- sewing together the flaps of one of said portions of fabric obtained with said tenth and said eleventh cutting line to create a ring;
- sewing said ring to said T-shirt along said seventh cutting line to create the collar.

The procedure according to the invention has numerous advantages, all related to the possibility of creating an undershirt using and processing a single tubular element constructed with a circular machine with seamless technology.

In detail, advantageously there is a reduction in:
- the amounts of raw materials used: with respect to the conventional procedure, using a single tubular element, the consumption of yarn is reduced proportionally by at least one third by eliminating the tubular element for construction of the sleeves and up to two thirds if the tubular element for construction of the collar is also eliminated;
- production times: with respect to the conventional procedure, using a single tubular element, the construction time of each single T-shirt is reduced, thereby increasing daily productivity and reducing the costs of the single garment sold;

- processing waste: the excess material deriving from cutting a single tubular element is reduced by 30-40% with respect to the excess material from the three tubular elements conventionally processed;
- processing costs following construction of the tubular element: after the single tubular element has been produced, the operations for handling the workpieces, of cutting, sewing and dyeing are greatly simplified and reduced in terms of time and labor costs;
- energy costs;
- costs for disposal of the waste material.

The undershirt produced is also very practical, particularly comfortable as technical sporting or leisure garment.

### Brief description of the drawings

These and other advantages will become more apparent from the following description of preferred embodiments of the invention, provided by way of non-limiting example, and with the aid of the figures, wherein:
Figs. 1A, 1B, 1C represent, in substantially simplified axonometric views, three steps of the procedure for manufacturing an undershirt according to the invention;
Figs. 2 and 3 represent, in schematized front plan view, a step of the procedure for manufacturing an undershirt in two possible variants of embodiments thereof;
Figs. 4A and 4B represent, in respectively front and rear exploded schematized plan view, a step of the procedure for manufacturing an undershirt in a further variant of embodiment;
Fig. 5 represents, in a substantially exploded axonometric view, a step of the manufacturing procedure of the undershirt of Figs. 4A and 4B.

### Detailed description of preferred embodiments of the invention

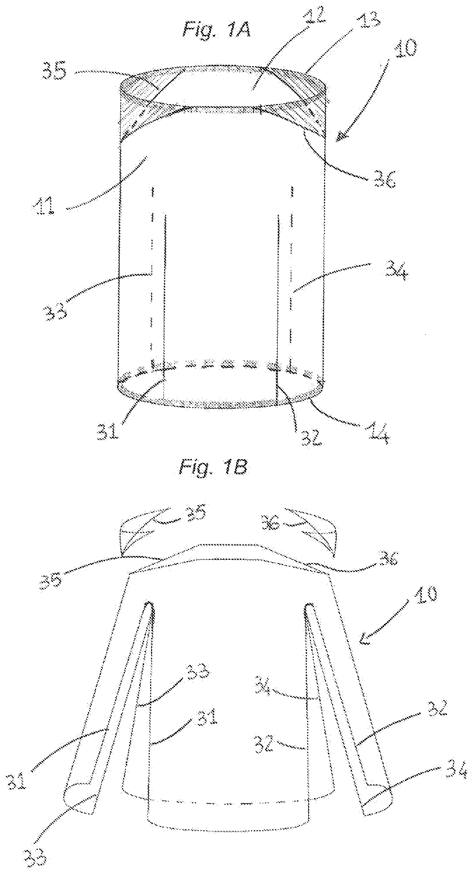

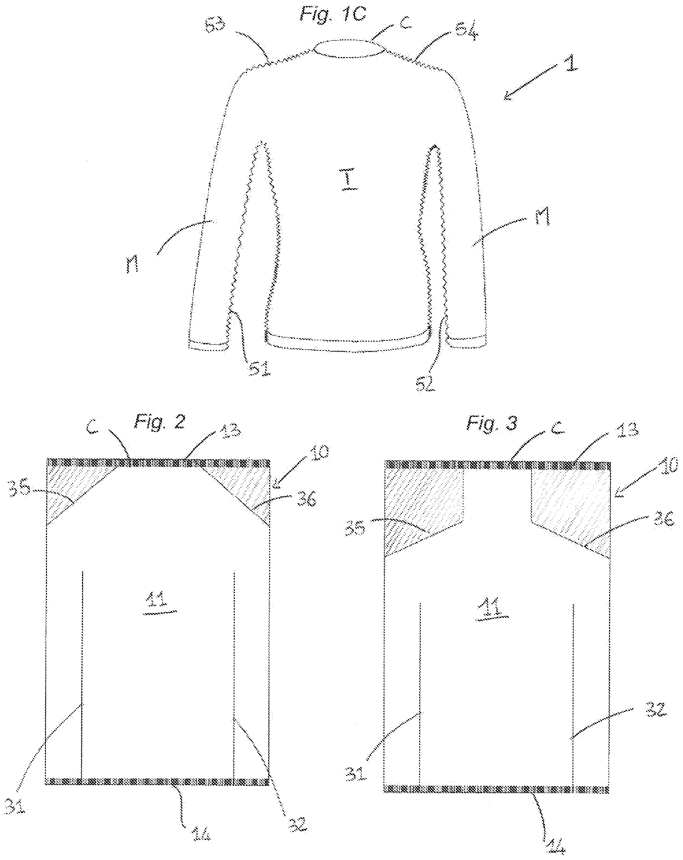

With particular reference to Figs. 1A, 1B, 1C, these illustrate three distinct steps of the procedure for manufacturing an undershirt 1, of the type provided with a trunk, two long sleeves and a collar, according to the invention.

The procedure involves the use of a circular knitting machine with seamless technology. The first step of the procedure concerns the construction, with said machine, of a first tubular element 10 in cylindrical fabric.

To facilitate the description and with reference to the final garment, said first tubular element 10 comprises a front side 11, a rear side 12, an upper edge 13 and a lower edge 14.

Said machine, interacting with a graphic program used to design the garment, creates on said first tubular element 10, during its construction step, structured areas (not illustrate) with particular features of elasticity and compression, and draws a plurality of cutting lines (Fig. 1A).

With particular reference to Fig. 1A, representing a type of T-shirt 1 also schematized in Fig. 2, said cutting lines are defined as follows:
- a first 31, a second 32, a third 33 and a fourth 34 cutting line are positioned longitudinal to the length of said first tubular element 10, between said lower edge 14 of said first tubular element 10 and an intermediate portion thereof, thus without reaching its upper edge 13; where said first 31 and said second 32 cutting line belong to the front side 11 of said first tubular element 10, while said third 33 and said fourth 34 cutting line belong to the rear side 12 thereof;
- a fifth 35 and a sixth 36 cutting line, each starting from the upper edge 13 of the front side 11 of said first tubular element 10, descending towards said lower edge 14 and rising again to end on the upper edge 13 of the rear side 12 of said first tubular element 10.

In a variant not illustrated, said first 31, second 32, third 33 and fourth 34 cutting line have an overturned elongated V shape. Each V shaped cutting line starts from a point that will define the underarm point to then open out towards the lower edge 14 of said first tubular element 10.

The second step of the procedure, illustrated in Fig. 1B, relates to cutting said first tubular element 10 along said cutting lines 31, 32, 33, 34, 35, 36 to separate portions of fabric, to create flaps of fabric belonging to the front side and to the rear side of said first tubular element. In this step the excess material deriving from cutting said first tubular element 10 along said fifth 35 and sixth 36 cutting line, i.e. the portions of fabric between said fifth 35 and sixth 36 cutting line and the upper edge 13 of said first tubular element 10, is also eliminated.

If said first 31, second 32, third 33 and fourth 34 cutting line have an overturned elongated V shape, the further excess material, between said cutting lines 31, 32, 33, 34 and the lower edge 14 of said tubular element 10, is to be eliminated.

Advantageously, during construction and drawing of the tubular element, the machine can be programmed to reduce the amount of yarn used in the areas outside the cutting lines, so that the excess material, which will subsequently be eliminated, is less and of lower quality, to obtain a further saving of raw material.

The third step of the procedure, illustrated in Fig. 1C, concerns stitching the flaps of the portions of fabric obtained with said cutting lines 31, 32, 33, 34, 35, 36 to manufacture said undershirt 1 and in particular to create the two sleeves, the trunk and the shoulders.

Fig. 1C then illustrates the manufactured undershirt 1, where in particular the following can be observed:
- a first seam 51, which starts and ends on the lower edge 14, adapted to join the flaps obtained with said first 31 and said third 33 cutting line to create the right sleeve and the right side of the trunk of said T-shirt;
- a second seam 52, which also starts and ends on the lower edge 14, adapted to join the flaps obtained with said second 32 and said fourth 34 cutting line to create the left sleeve and the left side of the trunk of said T-shirt;
- a third seam 53 adapted to join the flap belonging to the front side 11 of said first tubular element 10 with the flap belonging to the rear side 12 of said first tubular element 10 obtained with said fifth 35 cutting line to create the right shoulder of said T-shirt;
- a fourth seam 54 adapted to join the flap belonging to the front side 11 of said first tubular element 10 with the flap belonging to the rear side 12 of said first tubular element 10 obtained with said sixth 36 cutting line to create the left shoulder of said T-shirt.

Fig. 2 schematically represents the construction step of a T-shirt according to the procedure illustrated by Figs. 1A, 1B and 1C, while Fig. 3 schematically represents the construction and drawing step of the cutting lines for a further type of undershirt 1, in particular for a "mock turtleneck" T-shirt, i.e. with a high neck. The manufacturing procedure is identical to that described above, but said fifth 35 and sixth 36 cutting line are shaped differently and descend in more depth towards the lower edge 14 of the tubular element 10.

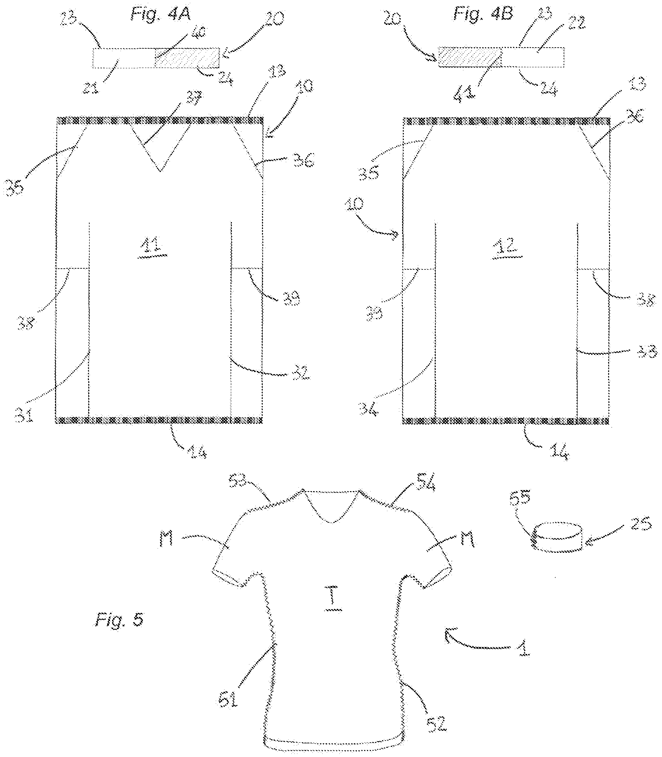

With particular reference to Figs. 4A, 4B and 5, these schematically illustrate the step of construction, of drawing the cutting lines and of stitching for a further type of undershirt 1, in particular for a V-neck T-shirt with short sleeves.

For said variant, the first step of the procedure concerns the construction, with said machine, of a first 10 and of a second 20 tubular element in cylindrical fabric.

In the same way as said first tubular element 10, said second tubular element 20 also comprises a front side 21 (part of Fig. 4A), a rear side 22 (part of Fig. 4B), an upper edge 23 and a lower edge 24.

With reference to Figs. 4A and 4B, these show the cutting lines defined as follows:
- a first 31, a second 32, a third 33 and a fourth 34 cutting line are positioned longitudinal to the length of said first tubular element 10, between said lower edge 14 of said first tubular element 10 and its intermediate portion, without reaching the upper edge 13, where said first 31 and said second 32 cutting line belong to the front side 11 of said first tubular element 10 while said third 33 and said fourth 34 cutting line belong to the rear side 12 thereof;
- a fifth 35 and a sixth 36 cutting line, each starting from the upper edge 13 of the front side 11 of said first tubular element 10, descending towards said lower edge 14 and rising again to end on the upper edge 13 of the rear side 12 of said first tubular element 10;

- a seventh cutting line 37 extends along said upper edge 13 of said first tubular element 10 and has a profiled shape, moving away from and towards said upper edge 13 to define the V shape of the collar;
- an eighth 38 and a ninth 39 cutting line are positioned transverse to the length of said first tubular element 10, between said first 31 and said third 33 cutting line and between said second 32 and said fourth 34 cutting line, respectively;
- a tenth 40 and an eleventh 41 cutting line, positioned longitudinal to the length of said second tubular element 20, between its lower edge 24 and its upper edge 23, where said tenth cutting line 40 belongs to the front side 21 of said second tubular element 20 while said eleventh cutting line 41 belongs to the rear side 22 thereof.

The subsequent step concerns the operation of cutting said first 10 and said second 20 tubular element along said cutting lines 31, 32, 33, 34, 35, 36, 37, 38, 39, 40, 41 to separate portions of fabric.

Moreover, the excess material deriving:
- from cutting said first tubular element 10, i.e., the fabric between said fifth 35, sixth 36 and seventh 37 cutting line and the upper edge 13 of said first tubular element 10, and between its lower edge 14 and said first 31, second 32, third 33, fourth 34, eighth 38 and ninth 39 cutting line;
- from cutting said second tubular element 20, i.e. the fabric between said tenth 40 and eleventh 41 cutting line and its upper 23 and lower 24 edges; is eliminated.

With reference to Fig. 5, this illustrates the step of stitching the flaps obtained with said cutting lines, to manufacture said T-shirt 1 and, in particular, the seams 51, 52, 53 and 54 will be created to create the two short sleeves M, the trunk T and the shoulders, while the seam 55 will be created to produce the ring that will define the V-shaped collar, once attached to said first tubular element 10 with further stitching.

The undershirt according to the invention can be created in any size, using a machine with a suitable diameter of cylinder and knitting a first tubular element of suitable length.

## Claims

1. Procedure for manufacturing an undershirt (1) provided with a trunk (T), two sleeves (M) and a collar (C), comprising the following steps:
- providing a circular knitting machine using seamless technology;
- constructing a first tubular fabric element (10) using said machine, where said first tubular element (10) comprises a front side (11), a rear side (12), an upper edge (13) and a lower edge (14);
- drawing cutting lines (31, 32, 33, 34) on said first tubular element (10), during construction;
- cutting said first tubular element (10) along said cutting lines (31, 32, 33, 34) to separate portions of fabric of said first tubular element (10) to create flaps of fabric belonging to the front side (11) and to the rear side (12) of said first tubular element (10); **characterized in that** it comprises the further steps of:
- joining with stitches the flaps of said portions of fabric, obtained during the preceding step of cutting said first tubular element (10) along said cutting lines (31, 32, 33, 34), to create at least the two sleeves (M) and the trunk (T) of said undershirt (1) from said first tubular element (10).

2. Procedure according to claim 1, **characterized in that** said step of drawing cutting lines on said first tubular element (10), during construction, comprises the step of drawing a first (31), a second (32), a third (33) and a fourth (34) cutting line positioned longitudinal to the length of said first tubular element (10), where said first (31) and said second (32) cutting line belong to the front side (11) of said first tubular element (10) while said third (33) and said fourth (34) cutting line belong to the rear side (12) thereof.

3. Procedure according to claim 2, **characterized in that** said first (31), second (32), third (33) and fourth (34) cutting lines are between said lower edge (14) of said first tubular element (10) and an intermediate portion, without reaching the upper edge (13).

4. Procedure according to claim 2, **characterized in that** said first (31), second (32), third (33) and fourth (34) cutting lines have an overturned elongated V shape and each start from the lower edge (14) of said first tubular element (10), rise towards said upper edge (13) and descend to finish once again on the lower edge (14).

5. Procedure according to claim 2, **characterized in that**:
- said step of drawing cutting lines on said first tubular element (10), during construction, comprises the step of drawing a fifth (35) and a sixth (36) cutting line, where said fifth (35) and said sixth (36) cutting line each start from the upper edge (13) of the front side (11) of said first tubular element (10), descend towards said lower edge (14) and rise again to end on the upper edge (13) of the rear side (12) of said first tubular element (10);
- said procedure comprises the steps of joining with stitches (53, 54) the flaps of said portions of fabric obtained with said cutting lines (35, 36) to create the two shoulders of said undershirt (1).

6. Procedure according to claim 5, **characterized in that** said step of drawing cutting lines on said first tubular element (10), during construction, comprises the step of drawing a seventh (37) cutting line that extends along said upper edge (13) of said first tubular element (10) and has a profiled shape, moving away from and towards said upper edge (13).

7. Procedure according to claim 6, **characterized in that** it comprises the step of drawing an eighth (38) and a ninth (39) cutting line positioned transversal to the length of said first tubular element (10), between said first (31) and said third (33) cutting line and between said second (32) and said fourth (34) cutting line respectively.

8. Procedure according to at least one of the previous claims, **characterized in that** it comprises the following steps:
- constructing a second fabric tubular element (20) using said machine, where said second tubular element (20) comprises a front side (21), a rear side (22), an upper edge (23) and a lower edge (24);
- drawing on said second tubular element (20), during construction, a tenth (40) and an eleventh (41) cutting line, positioned longitudinal to the length of said second tubular element (20), between its lower edge (24) and its upper edge (23), where said tenth cutting line (40) belongs to the front side (21) of said second tubular element (20) while said eleventh cutting line (41) belongs to the rear side (22) thereof;
- cutting said second tubular element (20) along said tenth (40) and said eleventh (41) cutting line to separate portions of fabric of said second tubular element (20);
- sewing together the flaps of one of said portions of fabric obtained with said tenth (40) and said eleventh (41) cutting line to create a ring (25);
- sewing said ring (25) to said T-shirt (1) along said seventh (37) cutting line to create the collar (C).

9. Procedure according to at least one of the previous claims, **characterized in that** it comprises the step of eliminating excess material deriving from cutting said first tubular element (10) along said cutting lines (31, 32, 33, 34, 35, 36, 37, 38, 39, 40, 41).
